# FASCICULE DE BREVET EUROPEEN

(11) **EP 0 439 413 B1**
(45) Date de publication et mention de la délivrance du brevet: **27.07.1994**
(21) Numéro de dépôt: 91420017.5
(22) Date de dépôt: 23.01.1991
(51) Int. Cl.: A47J 43/24

(54) **Saladier-brasseur**
Rühr- und Salatgefäss
Mixing bowl and salad bowl

(30) Priorité: 26.01.1990 FR 9001168
(43) Date de publication de la demande: 31.07.1991
(73) Titulaire: Bonnin, Yves, F-43000 Le Puy (FR); Bonnin, Georgette, F-43000 Le Puy (FR); Bonnin, Gérard, F-63400 Chamalieres (FR); Bonnin, Marie-Claude, F-63400 Chamalieres (FR); Bonnin, Philippe, F-69000 Lyon (FR); Bonnin, Marie-Christine, F-43000 Le Puy (FR)
(72) Inventeur: Bonnin, Yves, F-43000 Le Puy (FR); Bonnin, Georgette, F-43000 Le Puy (FR); Bonnin, Gérard, F-63400 Chamalieres (FR); Bonnin, Marie-Claude, F-63400 Chamalieres (FR); Bonnin, Philippe, F-69000 Lyon (FR); Bonnin, Marie-Christine, F-43000 Le Puy (FR)

(56) Documents cités:
- BE-A- 521 140
- FR-A- 2 083 717
- US-A- 1 893 628
- US-A- 3 635 147
- US-A- 4 065 107

## Description

L'invention se présente sous la forme d'un saladier traditionnel auquel on ajoute, le temps du brassage, un système facile à placer et à enlever.

L'intérêt majeur de l'invention est d'éviter toute éclaboussure ou tout débordement tant redouté des utilisateurs de couverts à salade traditionnels, tout en assurant un brassage doux et impeccable aussi bien pour les salades vertes que pour les fragiles salades de fruits.

La figure 1 représente en coupe verticale le long de l'axe de rotation un mode de réalisation préférentielle de l'ensemble du " saladier - brasseur " en position de marche.

La figure 2 représente une version possible de la rotation du brasseur sur le fond du saladier.

La figure 3 représente une vue perspective du saladier et du brasseur proprement dit selon la réalisation préférentielle.

La figure 4 représente, vu de dessus, le détail du système de blocage du couvercle, dépourvu partiellement de sa superstructure, suivant EE′ de la fig. 1.

L'ensemble est caractérisé par un saladier 1 au fond duquel tourne un brasseur 2 actionné par une manivelle 12. Une cloche 3 assure l'hermétisme et un couvercle 4 coiffant le tout exerce une pression constante sur le brasseur par l'intermédiaire d'un ressort 5 lorsqu'il est en position de blocage par rapport au saladier.

Le saladier peut être réalisé en tous matériaux ( verre, trempé ou non, Pyrex, Arcopal, plastique, porcelaine, etc ...).

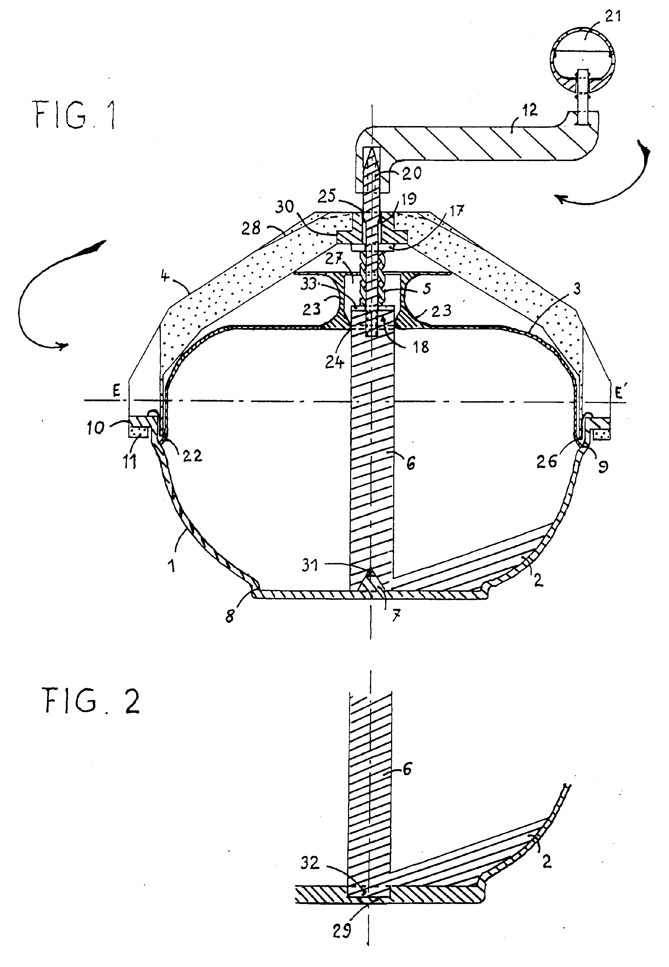

Son fond intérieur comporte en son centre une saillie 7 de forme troncônique de préférence mais qui peut être cylindrique, cônique ou les deux assossiées, et sur laquelle vient s'adapter l'axe 6 du brasseur et autour de laquelle il pivote. Une variante comporte un évidement central borgne 29 fig. 2, cylindrique de préférence, dans l'épaisseur du fond, dans lequel vient tourner un prolongement de l'axe.

Le brevet BE-A-521 140 fait état d'une saillie sur laquelle peut s'adapter et tourner l'axe du brasseur" mais concerne,en fait un " égouttoir à salade " utilisant une technique toute différente, à savoir la force centrifuge qui extrait l'eau alors que le " saladier - brasseur " incorpore des ingrédients.

Le brevet US-A- 1 893 628 fait état "d'un évidement central borgne, dans lequel peut tourner un prolongement de l'axe d'un brasseur ", mais cet appareil fait aussi appel à la force centrifuge pour malaxer essentiellement de la pâte sans précautions particulières alors que le brassage de la salade réclame beaucoup de délicatesse que justifie la forme spéciale du brasseur du "saladier-brasseur".

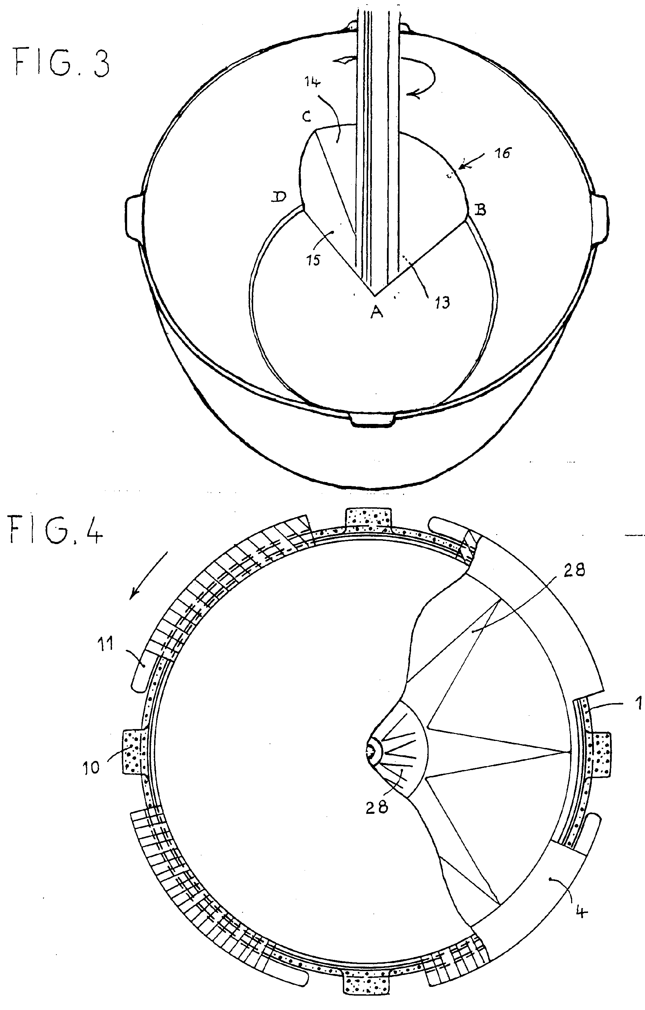

Le brasseur proprement dit 2 (voir fig. 1 et 3) a la forme d'un volume à quatre faces, en matière plastique de préférence.

La base 13 en contact parfait avec le fond du saladier par la pression du couvercle sur le ressort de l'axe du brasseur, peut couvrir entre environ 1/8ème et environ la moitié de la surface de base du saladier et de préférence 1/4.

La seconde face 14 s'élève progressivement jusqu'à la paroi du saladier en BC sous forme de plan incliné à partir de l'arête de base AB suivant un angle avec la base compris entre environ 10° et environ 80° et de préférence de 18° à 20°.

La troisième face 15 dont le plan incliné est sécant avec la face 14 en AC au départ de l'arête de base AD vient en contact avec la paroi du saladier en CD et forme avec un plan vertical élevé en AD, un angle compris entre environ 10° et environ 80° et de préférence 20° environ.

La quatrième face 16 épouse strictement la forme de la face interne du saladier sur laquelle elle glisse et rejoint les trois autres faces en CD, BC et BD.

La paroi latérale intérieure basse du saladier a la forme d'une petite couronne verticale 8 de faible hauteur servant de guide au brasseur 2.

La partie haute de cette paroi comporte un léger épaulement 9 servant d'appui à la cloche 3, avant de se terminer verticalement.

Le bord supérieur du saladier forme vers l'extérieur deux bossages 10 horizontaux, au moins, mais quatre de préférence, sous lesquels viennent se placer les languettes de blocage 11 du couvercle 4.

L'ensemble brasseur comprend le brasseur proprement dit 2, l'axe 6 dans la partie moyenne duquel se comprime le ressort à boudin 5 et la manivelle 12.

L'axe 6 du brasseur, en métal ou en plastique, solidaire du brasseur proprement dit, et perpendiculaire à sa base, comporte à sa base un évidement 31 (voir fig. 1) ou une saillie 32 (voir fig.2) et s'adapte parfaitement respectivement à la saillie 7 ou à l'évidement 29 selon le mode de fabrication choisi pour le fond du saladier.

Cet axe cylindrique comporte trois parties. La première au diamètre constant dépasse légèrement le fond de la cloche en 18 . Dans la seconde partie, d'un diamètre plus petit, est introduit un ressort à boudin 5 qui y est comprimé entre deux rondelles libres 17 et 33. La troisième partie après un léger épaulement 19 de la seconde partie sert de guide à l'introduction de la cloche et du couvercle; elle se termine effilée et comporte un plat 20 permettant le positionnement de la manivelle 12 à poignée mobile 21, à l'aplomb du brasseur proprement dit.

Les parties deux et trois solidaires sont vissées ou soudées en 18 sur la première partie de l'axe.

La cloche 3, convexe, en matière plastique, traversée par l'axe du brasseur, vient se positionner sur l'épaulement 9 de la paroi du saladier par son bord légèrement incurvé 22. Sa paroi supérieure est fortement incurvée en 23 pour faciliter sa prise et forme un vide cylindrique 27 fermé à sa base 24 par le prolongement de la paroi interne de la cloche qui est percé d' un trou de diamètre très légèrement supérieur à celui de l'axe du brasseur qu'il traverse à cet endroit. Cette cloche, en raison du volume supplémentaire de brassage qu'elle apporte,permet un brassage de grande qualité, élimine toute projection et protège le couvercle de toute souillure.

Le couvercle 4 en matière plastique est un volume plus ou moins alvéolé traversé par l'axe en 25 et venant se positionner au- dessus de la cloche. Une pression exercée verticalement sur le dessus et une rotation simultanée dans le sens inverse des aiguilles d'une montre, le bloquent dans une position de pression sur le ressort et sous les bossages du saladier.

L'axe du brasseur 6 pivote au contact de son renforcement métallique 30.

La base circulaire du couvercle, en forme de U renversé, vient se placer à cheval sur le bord du saladier (voir fig. 1 et 4). Le côté intérieur de ce U maintient la cloche en 26. Le côté extérieur échancré suffisamment pour pouvoir se placer facilement entre les quatre bossages 10 (voir fig. 4), comporte quatre solides languettes 11 venant bloquer le couvercle en position de pression sous les bossages, par réaction du ressort.

Le dessus et les flancs du couvercle sont rainurés 28 afin de faciliter sa prise et son maintien.

La mise en service consiste à positionner le brasseur dans le saladier, à mettre dans celui-ci les composants de la salade, à positionner la cloche, le couvercle et à le bloquer puis enfin placer la manivelle.

La rotation lente de la manivelle dans le sens des aiguilles d'une montre génère entre autre, en raison de la forme particulière du brasseur, deux rotations de la salade, l'une verticale, l'autre horizontale, assurant un brassage de qualité. Quelques rotations par intervalles dans le sens inverse sont conseillées pour la salade verte uniquement.

L'opération de brassage terminée, on retire la manivelle, puis on débloque le couvercle par pression et rotation à droite et on l'enlève. Une main maintient la cloche en place par l'évidement prévu, l'autre main s'empare de l'axe et le tire jusqu'à ce que le brasseur touche le fond de la cloche. Deux ou trois coups secs du brasseur contre la cloche élimineront l'ultime morceau de salade ramené par le brasseur. Les deux mains restant dans cette position, la cloche et son brasseur sont vivement retournés et transportés ainsi impeccablement pour lavage ultérieur. Le tout a été effectué en 10 secondes.

L'invention intéresse aussi bien les particuliers ( célibataires et ménages ) que les restaurateurs et les collectivités. Il suffit d'adapter la capacité du saladier aux besoins.

## Revendications

1. Saladier-brasseur composé d'un saladier (1) au fond duquel tourne un brasseur radial (2) actionné par une manivelle (12), permettant d'éviter éclaboussures et débordements lors du brassage des salades, caractérisé par une cloche (3) assurant l'hermétisme et un couvercle (4) coiffant le tout, qui exerce une pression sur le brasseur par l'intermédiaire d'un ressort (5), lorsqu'il est en position de blocage par rapport au saladier et en ce que le fond intérieur du saladier comporte en son centre un appui centreur sur lequel vient s'adapter et tourner l'axe (6) du brasseur radial.

2. Saladier-brasseur selon la revendication 1 caractérisé en ce que le fond intérieur du saladier comporte en son centre une saillie (7) de préférence troncônique sur laquelle vient s'adapter et tourner l'axe (6) du brasseur radial, ou comporte ( selon un autre mode de fabrication ) dans l'épaisseur du fond du saladier un évidement central borgne, cylindrique de préférence (29), dans lequel vient tourner un prolongement de l'axe (32), et en ce que le brasseur a la forme d'un volume à quatre faces dont la base (13) peut couvrir entre environ 1/8 et environ la moitié de la surface de base du saladier et de préférence 1/4, la seconde face (14) s'élève progressivement jusqu'à la paroi du saladier en BC sous forme de plan incliné à partir de l'arête de base AB, suivant un angle avec la base compris entre environ 10° et environ 80° et de préférence de 18° à 20°, la troisième face (15) dont le plan incliné est sécant avec la face (14) en AC au départ de l'arête de base AD, vient en contact avec la paroi du saladier en CD et forme avec un plan vertical élevé en AD un angle compris entre environ 10° et environ 80° et de préférence 20° environ, la quatrième face (16) épouse strictement la forme de la face interne du saladier sur laquelle elle glisse et rejoint les trois autres faces en CD, BC et BD.

3. Saladier-brasseur selon les revendications 1 et 2 caractérisé en ce que la paroi latérale intérieure basse du saladier a la forme d'une petite couronne verticale (8), de faible hauteur, servant de guide au brasseur (2).

4. Saladier-brasseur selon les revendications 1, 2 et 3 caractérisé en ce que la partie haute de cette paroi comporte un léger épaulement (9) servant d'appui à la cloche (3), avant de se terminer verticalement.

5. Saladier-brasseur selon les revendications 1, 2, 3 et 4 caractérisé en ce que le bord supérieur du saladier forme vers l'extérieur deux bossages horizontaux (10), au moins, mais quatre de préférence, sous lesquels viennent se placer les languettes de blocage (11) du couvercle (4).

6. Saladier-brasseur selon les revendications 1 et 2 caractérisé en ce que l'axe (6) du brasseur (2) comporte à sa base un évidement (31) ou une saillie (32) et s'adapte et pivote respectivement sur la saillie (7) ou dans l'évidement (29) selon le mode de fabrication choisi pour le fond du saladier.

7. Saladier-brasseur selon les revendications 1 et 4 caractérisé en ce que la cloche (3) vient se positionner sur l'épaulement (9) du saladier par son bord légèrement incurvé (22) et que sa paroi supérieure est fortement incurvée en (23) et forme un vide cylindrique (27) fermé à sa base (24) par le prolongement de la paroi interne de la cloche qui est percé d'un trou de diamètre légèrement supérieur à celui de l'axe du brasseur qui le traverse à cet endroit.

8. Saladier-brasseur selon les revendications 1 et 5 caractérisé en ce que le couvercle (4), lorsqu'il est bloqué sous les bossages (10) par les languettes (11), exerce une pression permanente sur le brasseur (2) par l'intermédiaire d'un ressort à boudin (5) agissant sur l'axe du brasseur (6) par une rondelle (33).

## Patentansprüche

1. RÜHR- UND SALATGEFÄSS bestehend aus einer Salatschüssel (1) mit einem durch Handgriff (12) in Bewegung setzenden radialen Rührer (2) am Boden und Spritzen sowie Überfliessen beim Mischen der Salate verhindernd. Die Glocke (3) sowie der Deckel (4) garantieren den hermetischen Verschluss. Der Deckel übt mittels einer Feder (5) Druck auf den Rührstab aus, einerseits wenn er bezüglich der salatschüssel blockiert ist und andererseits auch aufgrund der zentralisierenden Stütze in der Mitte des inneren Bodens, die Anpassung und Drehung der radialen Rühreraxe (6) ermöglicht.

2. RÜHR- UND SALATGEFÄSS nach Forderung 1 bestimmt durch entweder das Vorhandensein einer Stütze (7) in der Mitte des inneren Bodens der Salatschüssel. Dieser -vorzugsweise kugelstumpfartigen - Erhöhung passt sich die Axe (6) des radialen Rührstabes an und ermöglicht die Drehung. Oder es enthält (nach einem anderen Herstellungsverfahren) die Dicke des Schüsselbodens eine zentrale blinde - vorzugsweise walzenförmige - Aushöhlung (29) zum Drehen der verlängerten Axe (32). In diesem Fall hat der Rührstab die Form eines vierseitigen Volumens, dessen Basis (13) zwischen ca. 1/8 und ca. der Oberflächenhälfte des Schüsselbodens - vorzugsweise 1/4 - bedecken kann. Die zweite Seite (14) steigt allmählich bis zur Schüsselwand BC in Form einer schiefen Ebene ab Basiskante AB gemäss eines Winkels, dessen Basis zwischen ca. 10° und ca. 80° - vorzugsweise 18° - 20° - beträgt. Die dritte Seite (15) deren schiefe Ebene sich mit der Seite (14) in AC zu Beginn der Basiskante AD schneidet, kommt mit der Schüsselwand in CD in Berührung und bildet mit einer erhöhten Vertikalfläche in AD einen Winkel zwischen ca 10° und 80° - vorzugsweise ca. 20° -. Die vierte Seite (16) passt sich genau der Innenseitenform der Salatschüssel an über die sie gleitet und wieder auf die drei anderen Seiten in CD, BC und BD trifft.

3. RÜHR- UND SALATGEFÄSS nach den Forderungen 1 und 2 bezeichnend durch das Vorhandensein einer kleinen, vertikalen Krone (8) von geringer Höhe an der niedrigen lateralen Innenwand der Salatschüssel, die der Führung des Rührstabes (2) dient.

4. RÜHR- UND SALATGEFÄSS nach den Forderungen 1, 2 und 3 bezeichnend durch eine leichte Ausbuchtung (9) zur Stütze der Glocke (3) am oberen Teil der dann vertikal auslaufenden Innenwand.

5. RÜHR- UND SALATGEFÄSS nach den Forderungen 1, 2, 3 und 4 bezeichnend durch das Vorhandensein von mindestens 2 horizontalen - vorzugsweise 4 - Vorsprüngen (10) des oberen Schüsselrandes nach Aussen zur Aufnahme der Blockierungszungen (11) des Deckels (4).

6. RÜHR- UND SALATGEFÄSS nach den Forderungen 1 und 2 bezeichnend dadurch, dass die Axe (6) des Rührstabes (2) entweder eine Aushöhlung (31) oder eine Erhöhung (32) aufweist und die Drehungen je nach der gewählten Herstellungsweise des Schüsselbodens in der Aushöhlung (29) oder auf der Erhöhung (7) ermöglicht.

7. RÜHR- UND SALATGEFÄSS nach den Forderungen 1 und 4 bezeichnend dadurch, dass sich die Glocke (3) in die Ausbuchtung (9) der Salatschüssel mittels ihres leicht einwärts gekrümmten Randes (22) einfügt. Die obere Wand ist stark einwärts gekrümmt (23) und bildet einen walzenförmigen Leerraum (27) der auf seiner Basis (24) durch die verlängerte innere Glockenwand geschlossen ist. Letztere ist mit einer Lochung versehen, deren Durchmesser etwas über dem der Rührstabsaxe an der Stelle ihres Durchdringens liegt.

8. RÜHR- UND SALATGEFÄSS nach den Forderungen 1 und 5 bezeichnend dadurch, dass der Deckel (4) bei der Blockierung durch die Zungen (11) unter den Vorsprüngen (10) mittels einer Schraubenfeder (5) und einem Dichtungsring (33) einen beständigen Druck auf den Rührstab (2) und die Rühruraxe (6) ausübt.

## Claims

1. A mixing bowl and salad bowl comprising a salad bowl (1) at the interior of which a radial mixer (2) rotates, operated by a handle (12) which avoids splattering during the mixing of the salad. The salad bowl is characterized by a bell-shaped cover (3) which guarantees hermetic sealing, and a cover (4) placed over the whole which exerts a pressure on the mixer via a spring (5) when it is in a locked position in relation to the salad bowl and a central support on the inner base of the salad bowl on which the axis (6) of the radial mixer is fitted and rotates.

2. A mixing bowl and salad bowl of claim 1, characterized by a salad bowl, the interior of which has a protruding central support (7) preferably of a flattened cone shape on which is fitted and rotates the axis (6) of the radial mixer, or comprising (as in another manufacturing procedure) embedded in the base part of the salad bowl, a hollow central socket, preferably cylindrical (29) in which the prolongation of the axis (32) rotates ; and the mixing bowl has the shape of a four sided receptacle, the base of which (13) may cover between about 1/8 and a half of the surface of the base of the salad bowl and preferably 1/4, the second side (14) slants up from the base line AB to the side of the salad bowl BC, following an angle with the base of between about 10° and about 80°, and preferably between 18° and 20°; and the third side (15) slants up from the base line AD to intersect side (14) AC and comes into contact with the side of the salad bowl at CD and forms, with the vertical plane rising up from AD, an angle of between about 10° and about 80° and preferably about 20° and the fourth side (16) follows strictly the form of the internal face of the salad bowl on which it slides round and joins the other 3 sides CD, BC, and BD.

3. Mixing bowl and salad bowl of claims 1 and 2 characterized by a salad bowl which has a lower interior lateral side which has the form of a small vertical crown (8) of low height, serving as a guide to the mixer (2)

4. Salad bowl and mixing bowl of claims 1, 2 and 3, characterized by an upper part of this interior lateral side which has a slightly rounded protrusion (9) serving. as a support for the bell-shaped cover (3) before terminating vertically.

5. Salad bowl and mixing bowl of claims 1 , 2, 3 and 4 characterized by an upper edge of the salad bowl which forms at least 2 horizontal bosses towards the exterior (10) but preferably four, under which the locking parts (11) of the cover (4) fit.

6. Salad bowl and mixing bowl of claims 1 and 2 characterized by the axis (6) of the mixer (2) which has at its base a socket (31) or a protruding part (32) and fits and rotates.respectively on the protruding part (7) or in the socket (29) depending on the type of manufacturing process chosen for the base of the salad bowl.

7. Salad bowl and mixing bowl of claims 1 and 4 characterized by a bell-shaped cover (3) which rests on the slightly rounded protusion (9) of the salad bowl on its slightly incurvated edge. (22)and its upper side has a pronounced incurvation (23) and forms a cylindrical vacuum (27), closed at its base (24) by the prolongation of the internal face of the bell-shaped cover which is pierced by a hole of a slightly larger diameter than that of the axis of the mixer which passes through it at this point.

8. Salad bowl and mixing bowl of claims 1 and 5 characterized by a cover (4) which when it is locked under the bosses(10) by the tabs (11), exerts a continual pressure on the mixer (2) via a spiral spring(5) operating on the axis of the mixer (6) by a washer (33)
